# EUROPEAN PATENT APPLICATION

(11) **EP 4 845 290 A1**
(43) Date of publication of application: **25.11.2026**
(21) Application number: 24921527.8
(22) Date of filing: 17.10.2024
(51) Int. Cl.: H04W 74/0833

(54) **COMMUNICATION METHOD AND COMMUNICATION APPARATUS**

(30) Priority: 29.01.2024 CN 202410128380
(71) Applicant: Huawei Technologies Co., Ltd., Shenzhen, Guangdong 518129 (CN)
(72) Inventor: YANG, Rui, Shenzhen, Guangdong 518129 (CN); QIN, Cheng, Shenzhen, Guangdong 518129 (CN); WANG, Sihai, Shenzhen, Guangdong 518129 (CN); LI, Xueru, Shenzhen, Guangdong 518129 (CN)
(74) Representative: Huawei European IPR
(86) International application number: PCT/CN2024/125465
(87) International publication number: WO 2025/161503

(57) **Abstract**

This application provides a communication method and a communication apparatus. The method includes: receiving information about a first model; determining a DMRS sequence based on an identifier of a preamble and the first model; and sending the preamble carried on a RACH resource, and the DMRS sequence and PUSCH data that are carried on a PUSCH resource corresponding to the RACH resource. In this solution, a terminal device determines the DMRS sequence based on the identifier of the preamble and the first model. Sending of different DMRS sequences is performed on a same DMRS resource, and is no longer limited by a quantity of DMRS port, so that more terminal devices are supported in simultaneously requesting random access.

## Description

### CROSS-REFERENCE TO RELATED APPLICATIONS

This application claims priority to Chinese Patent Application No. 202410128380.0, filed with the China National Intellectual Property Administration on January 29, 2024 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

In a two-step random access procedure, that a terminal device sends a message A (message A) specifically includes: sending a preamble (preamble) carried on a random access channel (random access channel, RACH) resource, and sending a demodulation reference signal (demodulation reference signal, DMRS) sequence and PUSCH data carried on a physical uplink shared channel (physical uplink shared channel, PUSCH) resource corresponding to the RACH resource. The PUSCH data includes a random access request, and the DMRS sequence is sent through a DMRS port corresponding to the RACH resource.

However, currently, a quantity of DMRS ports is limited, for example, a maximum of 12 DMRS ports are currently supported. Therefore, to avoid affecting detection performance of a network device for PUSCH data, a maximum of 12 users (that is, terminal devices) are supported to send DMRS sequences simultaneously through different DMRS ports. If more than 12 users send DMRS sequences simultaneously, some users send DMRS sequences through a same DMRS port, resulting in deterioration in detection performance.

How to support more terminal devices in simultaneously requesting random access needs to be resolved.

### SUMMARY

Embodiments of this application provide a communication method and a communication apparatus, to support more terminal devices in simultaneously requesting random access.

According to a first aspect, an embodiment of this application provides a communication method. The method may be performed by a terminal device or a module (for example, a chip) in the terminal device. The method includes: receiving information about a first model; determining a demodulation reference signal (demodulation reference signal, DMRS) sequence based on an identifier of a preamble and the first model; and sending the preamble carried on a random access channel (random access channel, RACH) resource, and the DMRS sequence and PUSCH data that are carried on a physical uplink shared channel (physical uplink shared channel, PUSCH) resource corresponding to the RACH resource.

In the foregoing solution, the terminal device determines the DMRS sequence based on the identifier of the preamble and the first model. Sending of different DMRS sequences is performed on the same DMRS resource, and is no longer limited by a quantity of DMRS port, so that more terminal devices are supported in simultaneously requesting random access.

In a possible implementation, the determining the DMRS sequence based on the identifier of the preamble and the first model includes: determining a DMRS port number based on the identifier of the preamble and inputting the DMRS port number into the first model to obtain the DMRS sequence; or inputting the identifier of the preamble into the first model to obtain the DMRS sequence.

In a possible implementation, the method further includes: receiving indication information, where the indication information indicates a correspondence between the RACH resource and the PUSCH resource.

In a possible implementation, the information about the first model and the indication information are included in same system information, or are separately included in different system information.

In a possible implementation, the method further includes: receiving information about a second model; and determining the PUSCH resource based on the identifier of the preamble and the second model.

In the foregoing solution, the PUSCH resource is determined based on the information about the second model. This helps map DMRS sequences sent by different terminal devices to different PUSCH resources, to avoid mutual interference as much as possible, thereby improving a success rate of detecting PUSCH data by a network device.

In a possible implementation, the information about the first model and the information about the second model are included in same system information, or are separately included in different system information.

In a possible implementation, the information about the first model includes at least one of an identifier of the first model, network structure information of the first model, or a weight of the first model. The information about the second model includes at least one of an identifier of the second model, network structure information of the second model, or a weight of the second model.

In a possible implementation, the determining the PUSCH resource based on the identifier of the preamble and the second model includes: determining the PUSCH resource based on the identifier of the preamble, first information, and the second model, where the first information includes at least one of the following: a priority of a service of the terminal device, quality of a synchronization signal block (synchronization signal block, SSB) measured by the terminal device, or an index of the SSB measured by the terminal device.

In the foregoing solution, the PUSCH resource is determined based on the first information, so that DMRS sequences sent by different terminal devices can be mapped to different PUSCH resources, to avoid mutual interference as much as possible, thereby improving a success rate of detecting PUSCH data by the network device.

In a possible implementation, the method further includes: determining at least one of a transmit power of the preamble, a transmit power of the DMRS sequence, or a transmit power of the PUSCH data based on the identifier of the preamble, the first information, and the second model.

The foregoing solution helps reduce mutual interference caused when different terminal devices send preambles, DMRS sequences, and PUSCH data, to improve a success rate of sending the preambles, the DMRS sequences, and the PUSCH data, and improve detection performance of the network device.

According to a second aspect, an embodiment of this application provides a communication method. The method may be performed by a terminal device or a module (for example, a chip) in the terminal device. The method includes: receiving first indication information, where the first indication information indicates a DMRS sequence corresponding to a preamble; and sending, based on the first indication information, the preamble carried on a RACH resource, and the DMRS sequence and PUSCH data that are carried on a PUSCH resource corresponding to the RACH resource.

In the foregoing solution, the terminal device determines the DMRS sequence based on the first indication information. Sending of different DMRS sequences is performed on the same DMRS resource, and is no longer limited by a quantity of DMRS port, so that more terminal devices are supported in simultaneously requesting random access.

In a possible implementation, the first indication information includes a correspondence between the preamble and the DMRS sequence.

In a possible implementation, the first indication information includes an identifier of the DMRS sequence and the DMRS sequence. The method further includes: determining the DMRS sequence based on the first indication information and a correspondence between the identifier of the DMRS sequence and an identifier of the preamble.

In a possible implementation, the method further includes: receiving second indication information, where the second indication information indicates a correspondence between the RACH resource and the PUSCH resource.

In a possible implementation, the first indication information and the second indication information are included in same system information, or are separately included in different system information.

In a possible implementation, the method further includes: receiving information about a second model; and determining the PUSCH resource based on the identifier of the preamble and the second model.

In the foregoing solution, the PUSCH resource is determined based on the information about the second model. This helps map DMRS sequences sent by different terminal devices to different PUSCH resources, to avoid mutual interference as much as possible, thereby improving a success rate of detecting PUSCH data by a network device.

In a possible implementation, the first indication information and the information about the second model are included in same system information, or are separately included in different system information.

In a possible implementation, the information about the second model includes at least one of an identifier of the second model, network structure information of the second model, or a weight of the second model.

In a possible implementation, the determining the PUSCH resource based on the identifier of the preamble and the second model includes: determining the PUSCH resource based on the identifier of the preamble, first information, and the second model, where the first information includes at least one of the following: a priority of a service of the terminal device, quality of an SSB measured by the terminal device, or an index of the SSB measured by the terminal device.

In the foregoing solution, the PUSCH resource is determined based on the first information, so that DMRS sequences sent by different terminal devices can be mapped to different PUSCH resources, to avoid mutual interference as much as possible, thereby improving a success rate of detecting PUSCH data by the network device.

In a possible implementation, the method further includes: determining at least one of a transmit power of the preamble, a transmit power of the DMRS sequence, or a transmit power of the PUSCH data based on the identifier of the preamble, the first information, and the second model.

The foregoing solution helps reduce mutual interference caused when different terminal devices send preambles, DMRS sequences, and PUSCH data, to improve a success rate of sending the preambles, the DMRS sequences, and the PUSCH data, and improve detection performance of the network device.

According to a third aspect, an embodiment of this application provides a communication method. The method may be performed by a network device or a module (for example, a chip) in a network device. The method includes: receiving a preamble carried on a RACH resource; determining a DMRS sequence based on an identifier of the preamble; and determining, based on the DMRS sequence, a received signal on a PUSCH resource corresponding to the RACH resource, and a third model, PUSCH data carried on the PUSCH resource.

In the foregoing solution, the network device determines the DMRS sequence based on the identifier of the preamble. Sending of different DMRS sequences is performed on the same DMRS resource, and is no longer limited by a quantity of DMRS port, so that more terminal devices are supported in simultaneously requesting random access. In addition, the network device does not need to perform channel estimation. Instead, the network device can obtain the PUSCH data by inputting the received signal on the PUSCH resource into the third model, so that a detection method is simple and has high precision.

In a possible implementation, the determining the DMRS sequence based on the identifier of the preamble includes: determining the DMRS sequence based on the identifier of the preamble and a first model.

In a possible implementation, the determining the DMRS sequence based on the identifier of the preamble and the first model includes: determining a DMRS port number based on the identifier of the preamble and inputting the DMRS port number into the first model to obtain the DMRS sequence; or inputting the identifier of the preamble into the first model to obtain the DMRS sequence.

In a possible implementation, the method further includes: sending information about the first model.

In a possible implementation, the information about the first model includes at least one of an identifier of the first model, network structure information of the first model, or a weight of the first model.

In a possible implementation, the method further includes: determining the PUSCH resource based on the identifier of the preamble and a second model.

In the foregoing solution, the PUSCH resource is determined based on information about the second model. This helps map DMRS sequences sent by different terminal devices to different PUSCH resources, to avoid mutual interference as much as possible, thereby improving a success rate of detecting PUSCH data by the network device.

In a possible implementation, the method further includes: sending the information about the second model.

In a possible implementation, the information about the second model includes at least one of an identifier of the second model, network structure information of the second model, or a weight of the second model.

In a possible implementation, the method further includes: obtaining the third model based on a quantity of terminal devices that send DMRS sequences on the PUSCH resource.

In the foregoing solution, the corresponding third model is determined based on the quantity of terminal devices that send DMRS sequences on the same PUSCH resource. This helps select a third model with proper performance for parsing PUSCH data, and improve a success rate of data parsing.

According to a fourth aspect, an embodiment of this application provides a communication apparatus. The apparatus may be a terminal device, or may be a module (for example, a chip) in the terminal device. The apparatus has a function of implementing any implementation of the first aspect and the second aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a network device, or may be a module (for example, a chip) in the network device. The apparatus has a function of implementing any implementation of the third aspect. The function may be implemented by hardware, or may be implemented by hardware executing corresponding software. The hardware or the software includes one or more modules corresponding to the function.

According to a sixth aspect, an embodiment of this application provides a communication apparatus, including a unit or means configured to perform steps of any implementation of the first aspect to the third aspect.

According to a seventh aspect, an embodiment of this application provides a communication apparatus, including a processor and an interface circuit. The processor is configured to: communicate with another apparatus through the interface circuit; and perform any implementation of the first aspect to the third aspect. There are one or more processors.

Optionally, the communication apparatus may further include a memory configured to store computer instructions. The memory is coupled to the processor, and the processor executes the computer instructions stored in the memory, to cause the apparatus to perform any implementation of the first aspect to the third aspect.

According to an eighth aspect, an embodiment of this application further provides a computer program product. The computer program product includes a computer program or instructions. When the computer program or the instructions are run by a communication apparatus, any implementation of the first aspect to the third aspect is performed.

According to a ninth aspect, an embodiment of this application further provides a computer-readable storage medium. The computer-readable storage medium stores instructions, and when the instructions are run on a communication apparatus, any implementation of the first aspect to the third aspect is performed.

According to a tenth aspect, this application provides a chip (or a chip system). The chip includes a processor, the processor is coupled to a memory, the memory stores a computer program, and the processor is configured to invoke a part or all of the computer program in the memory, to cause any implementation of the first aspect to the third aspect to be performed.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a diagram of a four-step random access procedure;
FIG. 3 is a diagram of a two-step random access procedure;
FIG. 4(a) is an example diagram of a DMRS time-frequency resource configuration pattern;
FIG. 4(b) is an example diagram of single-symbol type 1 DMRS resource configurations corresponding to a PUSCH mapping type A and a PUSCH mapping type B;
FIG. 5 is a schematic flowchart of a communication method according to an embodiment of this application;
FIG. 6 is an example diagram of a DMRS resource configuration;
FIG. 7 is a schematic flowchart of a communication method according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

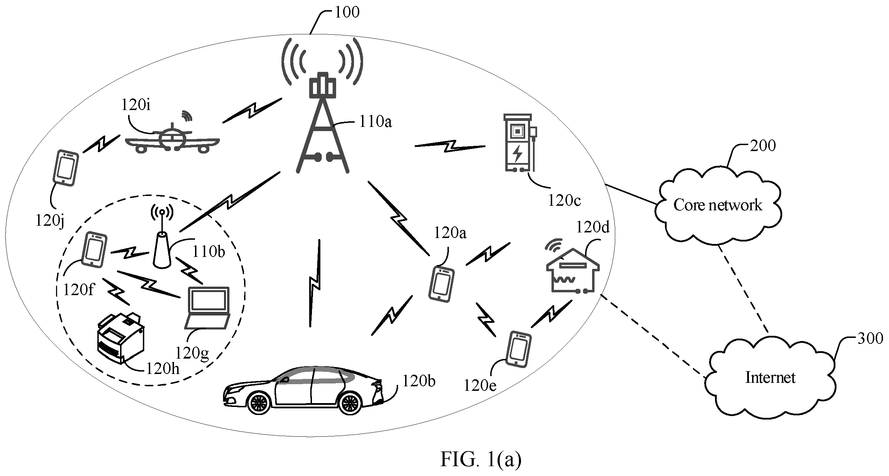

FIG. 1(a) is a diagram of an architecture of a communication system to which an embodiment of this application is applied. The communication system shown in FIG. 1(a) includes a radio access network 100 and a core network 200. Optionally, the communication system further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices independent of each other, functions of the core network device and logical functions of the network device may be integrated into a same physical device, or some functions of the core network device and some functions of the network device may be integrated into one physical device. Terminal devices may be connected to each other and network devices may be connected to each other in a wired or wireless manner. FIG. 1(a) is only a diagram. The communication system may further include another network device, for example, may further include a wireless relay device and a wireless backhaul device, which are not shown in FIG. 1(a).

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), may be a distributed unit (distributed unit, DU), or may be a radio unit (radio unit, RU). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal device may be specifically a mobile phone, a tablet computer, a computer having a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed positions, or may be movable. The network device and the terminal device may be deployed on land, including indoor devices, outdoor devices, handheld devices, or vehicle-mounted devices; may be deployed on water; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device, in other words, 110a and 120i communicate with each other by using a radio air interface protocol. Certainly, 110a and 120i may alternatively communicate with each other by using an interface protocol between network devices. In this case, for 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication between the network device and the terminal device, between network devices, or between terminal devices may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the network device may alternatively be performed by a module (for example, a chip) in the network device, or may be performed by a control subsystem including the function of the network device. The control subsystem including the function of the network device may be a control center in the foregoing application scenarios such as a smart grid, industrial control, intelligent transportation, and a smart city. The function of the terminal device may alternatively be performed by a module (for example, a chip or a modem) in the terminal device, or may be performed by an apparatus including a function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection to a cell controlled by the network device. The cell that establishes the wireless connection with the terminal device is referred to as a serving cell of the terminal device.

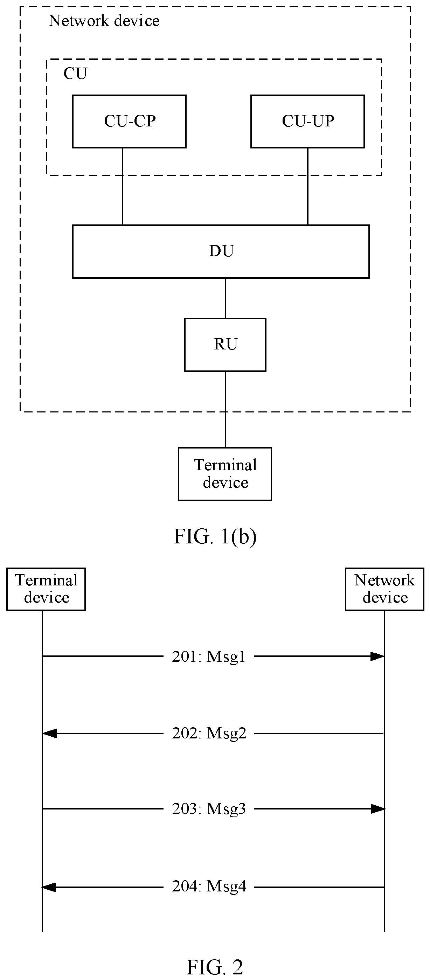

FIG. 1(b) is a diagram of a network device. As shown in FIG. 1(b), the network device includes one or more CUs, one or more DUs, and one or more RUs. For clarity, FIG. 1(b) shows only one CU, one DU, and one RU. The CU is configured to connect to a core network and the one or more DUs. Optionally, the CU may have some functions of the core network. The CU may include a CU-control plane (control plane, CP) and a CU-user plane (user plane, UP).

The CU and the DU may be configured based on a protocol layer function of a wireless network implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer). The DU is configured to implement a function of a protocol layer below the PDCP layer (for example, a radio link control (radio link control, RLC) layer, a medium access control (medium access control, MAC) layer, and/or a physical (physical, PHY) layer). For another example, the CU is configured to implement a function of a protocol layer above a PDCP layer (for example, an RRC layer and/or an SDAP layer), and the DU is configured to implement a function of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, part of functions of the RLC layer and a function of a protocol layer above the RLC layer are set on the CU, and remaining functions of the RLC layer and a function of a protocol layer below the RLC layer are set on the DU. For another example, division into functions of the CU or the DU may alternatively be performed based on service types or other system requirements, for example, based on latency. Functions whose processing time needs to meet a latency requirement are set on the DU, and functions whose processing time does not need to meet the latency requirement are set on the CU.

The DU and the RU may work together to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions is closer to the MAC layer. The lower-layer function of the physical layer may include another part of functions of the physical layer, and the another part of functions is closer to an intermediate radio frequency side.

The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an open radio access network (open radio access network, ORAN) system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by using a software module, a hardware module, or a combination of a software module and a hardware module.

For ease of understanding the present invention, the following describes terms in the present invention.

### 1. Four-step random access procedure

A terminal device accesses a network device through a random access procedure. Currently, random access procedures are classified into a four-step random access procedure and a two-step random access procedure.

FIG. 2 is a diagram of a four-step random access procedure. The procedure includes the following steps.

Step 201: A terminal device sends a message 1 (message 1, Msg1) to a network device. Correspondingly, the network device receives the message 1.

The terminal device selects and sends a random access preamble (random access preamble) based on system information 1 (system information 1, SIB1) broadcast by a cell, where the random access preamble is carried in the message 1.

The message 1 is also referred to as a random access request (random access request) message.

In this application, the random access preamble may also be referred to as a random access channel (random access channel, RACH) preamble or a preamble. For ease of description, the random access preamble is referred to as a preamble for short in the following. This is uniformly described herein. Details are not described in the following.

Step 202: The network device sends a message 2 (message 2, Msg2) to the terminal device. Correspondingly, the terminal device receives the message 2.

After detecting the preamble sent by the terminal device, the network device sends the message 2 to the terminal device. The message 2 includes an identifier of the detected preamble, a timing advance (Timing Advance, TA) command, a cell-radio network temporary identifier (Cell-Radio Network Temporary Identifier, C-RNTI), and an uplink grant (uplink grant, UL grant) used for physical uplink shared channel (physical uplink shared channel, PUSCH) transmission.

The message 2 is also referred to as a random access response (random access response) message.

Step 203: The terminal device sends a message 3 (message 3, Msg3) to the network device. Correspondingly, the network device receives the message 3.

After receiving the message 2, the terminal device sends the message 3 to the network device on a resource indicated by the UL grant, in other words, the message 3 is transmitted on a PUSCH. The message 3 includes a contention resolution identifier.

The message 3 is also referred to as a radio resource control setup request (radio resource control setup request, RRCSetupRequest) message.

Step 204: The network device sends a message 4 (message 4, Msg4) to the terminal device. Correspondingly, the terminal device receives the message 4.

After receiving the message 3, the network device sends the message 4 to the terminal device. The message 4 includes a contention resolution identifier.

After receiving the message 4, the terminal device determines whether the contention resolution identifier in the message 4 is the same as the contention resolution identifier sent by the terminal device in the message 3. If the two contention resolution identifiers are the same, the terminal device considers that contention resolution succeeds and that access succeeds; or if the two contention resolution identifiers are different, the terminal device considers that the contention resolution fails, and may re-initiate a random access procedure.

The message 4 is also referred to as a radio resource control setup (radio resource control setup, RRCSetup) message.

The foregoing describes the four-step random access procedure, and the following describes a two-step random access procedure.

### 2. Two-step random access procedure

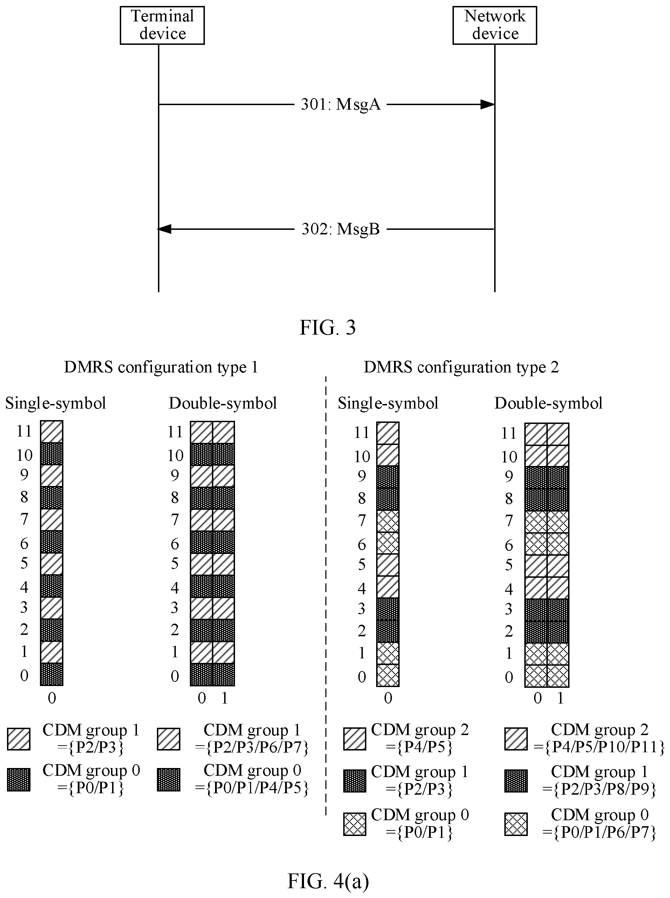

FIG. 3 is a diagram of a two-step random access procedure. The procedure includes the following steps.

Step 301: A terminal device sends a message A (message A, MsgA) to a network device. Correspondingly, the network device receives the message A.

In this step, a message 1 and a message 3 in a four-step random access procedure are combined into one message, that is, the message A, for sending. Therefore, the message A includes information in the message 1 and information in the message 3, for example, includes a preamble and a contention resolution identifier.

Before step 301, the terminal device receives system information broadcast by the network device. The system information includes a correspondence between a random access channel occasion (RACH Occasion, RO) and a physical uplink shared channel occasion (PUSCH Occasion, PO). The RO indicates a RACH resource, and the PO indicates a PUSCH data resource for sending PUSCH data, a demodulation reference signal (demodulation reference signal, DMRS) resource for sending a DMRS sequence, and a DMRS port. The DMRS resource and the PUSCH data resource may be collectively referred to as a PUSCH resource. Therefore, in step 301, the terminal device selects, based on the RO in the system information, the RACH resource to send the preamble, and performs PUSCH transmission, for example, sends a contention resolution identifier, on a corresponding PUSCH data resource through a corresponding DMRS port.

The RO and the PO may be in one-to-one correspondence, or may be in a many-to-one relationship.

For example, a mapping that is between the RO and the PO and that is indicated by the system information includes the following information 1 to information 5.

The information 1 includes a mapping relationship between a RACH resource 1, a PUSCH resource 1, and a DMRS port 0, where the PUSCH resource 1 includes a PUSCH data resource 1 and a DMRS resource 1.

The information 2 includes a mapping relationship between a RACH resource 2, the PUSCH resource 1, and a DMRS port 1, where the PUSCH resource 1 includes the PUSCH data resource 1 and the DMRS resource 1.

The information 3 includes a mapping relationship between a RACH resource 3, a PUSCH resource 2, and the DMRS port 0, where the PUSCH resource 2 includes a PUSCH data resource 2 and a DMRS resource 2.

The information 4 includes a mapping relationship between a RACH resource 4, the PUSCH resource 2, and the DMRS port 1, where the PUSCH resource 2 includes the PUSCH data resource 2 and the DMRS resource 2.

The information 5 includes a mapping relationship between a RACH resource 5, a PUSCH resource 3, and the DMRS port 0, where the PUSCH resource 3 includes a PUSCH data resource 3 and a DMRS resource 3.

Step 302: The network device sends a message B (message B, MsgB) to the terminal device. Correspondingly, the terminal device receives the message B.

After receiving the message A, the network device parses the preamble after detecting the preamble, and demodulates a PUSCH on a corresponding PO. Then, the network device sends the message B to the terminal device. The message B is a combination of a message 2 and a message 4 in the four-step random access procedure. Therefore, the message B includes information in the message 2 and information in the message 4.

After receiving the message B, the terminal device determines whether a contention resolution identifier in the message B is the same as the contention resolution identifier sent by the terminal device in the message A. If the two contention resolution identifiers are the same, the terminal device considers that contention resolution succeeds and that access succeeds; or if the two contention resolution identifiers are different, the terminal device considers that the contention resolution fails, and may re-initiate a random access procedure.

The foregoing describes the two-step random access procedure. Compared with the four-step random access procedure, the two-step random access procedure can reduce latency and control signaling overheads.

3. Channel estimation and demodulation reference signal (demodulation reference signal, DMRS)

To reduce air-interface latency at a physical layer, an effective manner is to reduce latency of physical downlink shared channel (physical downlink shared channel, PDSCH) hybrid automatic repeat request (hybrid automatic repeat request, HARQ) processing or PUSCH HARQ processing. A procedure of processing a data signal at the physical layer of a receive end is decomposed. First, fast Fourier transform (fast Fourier transform, FFT) is performed on a received time-domain sampled signal at the receive end, to obtain frequency domain data. Further, to restore an original signal, channel estimation needs to be performed based on a reference signal, and then channel equalization is performed to compensate for distortion of an input signal caused by a non-ideal channel, to eliminate or reduce interference caused by multi-path latency during broadband communication. Finally, data demodulation and decoding are performed on an equalized signal at the receive end. For the channel estimation, a network device configures a DMRS to reduce latency. The DMRS is for channel estimation during PDSCH/PUSCH demodulation. Each cell independently configures a set of DMRS generation parameters for a terminal device.

Based on grouping of different DMRS ports (port), two DMRS configuration types are defined in a protocol: a type 1 and a type 2. In time domain, the DMRS supports single-symbol and double-symbol mapping. For a single-symbol type 1 DMRS, four ports (that is, four DMRS ports) are supported; and for a double-symbol type 1 DMRS, eight ports (that is, eight DMRS ports) are supported. For a single-symbol type 2 DMRS, six ports (that is, six DMRS ports) are supported; and for a double-symbol type 2 DMRS, 12 ports (that is, 12 DMRS ports) are supported. In frequency domain, different DMRS ports are grouped into different code division multiplexing (code division multiplexing, CDM) groups (group). DMRS ports within a same group use orthogonal cover codes (orthogonal cover code, OCC) to perform spreading on a DMRS in time-frequency domain, to ensure orthogonality in the different ports. This helps improve accuracy of channel estimation. FIG. 4(a) is an example diagram of a DMRS time-frequency resource configuration pattern, where P0, P1, ..., P11 represent DMRS port indexes. It can be learned that, for a DMRS configuration type 1, when single-symbol mapping is used for a DMRS, a maximum of four DMRS ports, that is, P0 to P3, are supported; and for the DMRS configuration type 1, when double-symbol mapping is used for the DMRS, a maximum of eight DMRS ports, that is, P0 to P7, are supported. For a DMRS configuration type 2, when single-symbol mapping is used for the DMRS, a maximum of six DMRS ports, that is, P0 to P5, are supported; and for the DMRS configuration type 2, when double-symbol mapping is used for the DMRS, a maximum of 12 DMRS ports, that is, P0 to P11, are supported.

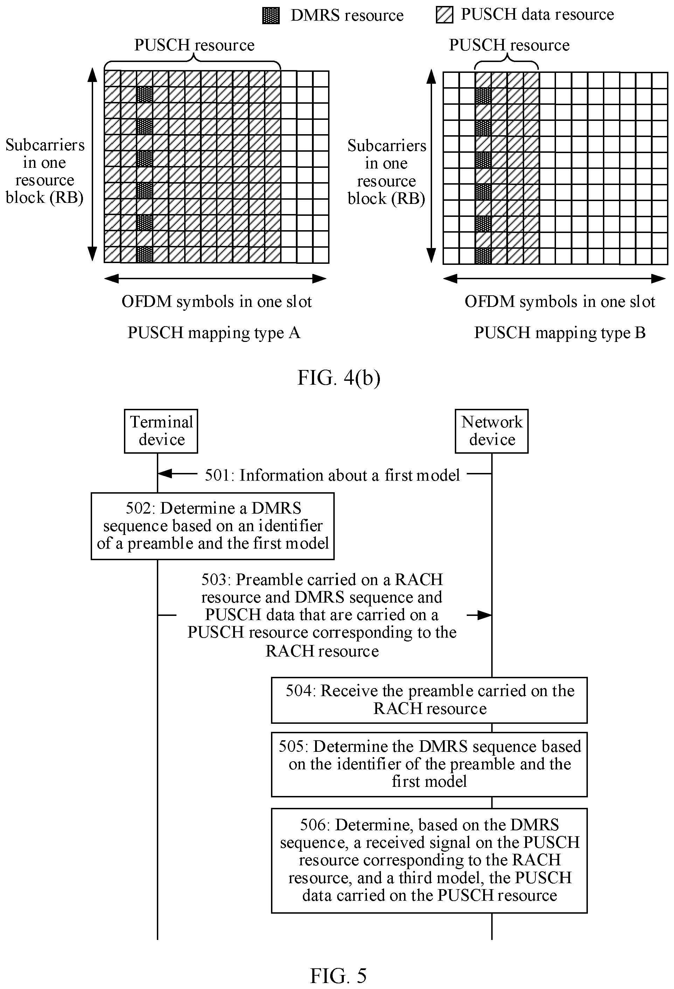

For a DMRS resource configuration, key parameters include a PUSCH/PDSCH resource mapping type (that is, a type A or type B), a DMRS configuration type (that is, a type 1 or type 2), and a quantity of symbols for a DMRS (that is, a single-symbol DMRS or a double-symbol DMRS). A PUSCH DMRS configuration is used as an example. A DMRS configuration type is configured by using a higher-layer parameter *dmrs-Type*. A quantity of symbols for a DMRS is determined by using both a higher-layer parameter *maxLength* and an antenna port field in downlink control information (downlink control information, DCI). If a value of *maxLength* is 1, it indicates that the DMRS is a single-symbol DMRS; if the value of *maxLength* is 2, whether the DMRS is a single-symbol DMRS or a double-symbol DMRS is determined based on *maxLength* and the DCI. FIG. 4(b) is an example diagram of single-symbol type 1 DMRS resource configurations corresponding to a PUSCH mapping type A and a PUSCH mapping type B. For the PUSCH mapping type A, PUSCH data is mapped starting from a symbol 0, and a PUSCH DMRS is mapped starting from a symbol 2. For the PUSCH mapping type B, a DMRS is located in a 1^{st} symbol of a PUSCH, to be specific, an index of a start symbol indicated by a start and length indication value (start and length indicator value, SLIV) parameter of the PUSCH is 2. In this case, the DMRS is mapped starting from a symbol 2. A PUSCH resource includes a DMRS resource and a PUSCH data resource, the DMRS resource carries different DMRS sequences through different DMRS ports, and the PUSCH data resource is for carrying PUSCH data.

Based on the foregoing descriptions of the two-step random access procedure, that the terminal device sends the message A specifically includes: sending a preamble carried on a RACH resource, and a DMRS sequence and PUSCH data that are carried on a PUSCH resource corresponding to the RACH resource. The PUSCH data includes a random access request, and the DMRS sequence is sent through a DMRS port corresponding to the RACH resource.

However, currently, a quantity of DMRS ports is limited, for example, in the example shown in FIG. 4(a), a maximum of 12 DMRS ports are supported. Therefore, to avoid affecting detection performance of a network device for PUSCH data, a maximum of 12 users (that is, terminal devices) are supported to send DMRS sequences simultaneously through different DMRS ports. If more than 12 users send DMRS sequences simultaneously, some users send DMRS sequences through a same DMRS port, resulting in deterioration in detection performance.

To resolve this problem, this application provides corresponding embodiments. The following provides detailed descriptions.

FIG. 5 is a schematic flowchart of a communication method according to an embodiment of this application. The method is performed by a network device or a module (for example, a chip) of the network device, and a terminal device or a module (for example, a chip) of the terminal device. The following uses an example in which the method is performed by the network device and the terminal device for description.

The method includes the following steps.

Step 501: The network device sends information about a first model to the terminal device. Correspondingly, the terminal device receives the information about the first model.

In this embodiment of this application, a model may also be referred to as a codebook, a dictionary, or the like. This is uniformly described herein. Details are not described in the following.

The information about the first model includes at least one of an identifier of the first model, network structure information of the first model, or a weight of the first model. The network structure information of the first model indicates information about each node in the first model and a relationship between nodes. The weight of the first model indicates a value of a coefficient or a weight between different nodes in the first model.

For example, if the information about the first model includes the identifier of the first model, the network structure information of the first model, and the weight of the first model, or includes the network structure information of the first model and the weight of the first model, the terminal device may determine the first model based on the information about the first model.

For another example, if the terminal device pre-stores the identifier of the first model and the network structure information of the first model, the information that is about the first model and that is sent by the network device in step 501 may include the identifier of the first model and the weight of the first model. The terminal device determines the first model based on the information that is about the first model and that is received from the network device and the identifier of the first model and the network structure information of the first model that are locally stored. The identifier of the first model and the network structure information of the first model that are pre-stored in the terminal device may be defined in a protocol or a standard, or may be preconfigured by the network device for the terminal device.

For another example, if the terminal device pre-stores the identifier of the first model and the weight of the first model, the information that is about the first model and that is sent by the network device in step 501 may include the identifier of the first model and the network structure information of the first model. The terminal device determines the first model based on the information that is about the first model and that is received from the network device and the identifier of the first model and the weight of the first model that are locally stored. The identifier of the first model and the weight of the first model that are pre-stored in the terminal device may be defined in a protocol or a standard, or may be preconfigured by the network device for the terminal device.

For another example, if the terminal device pre-stores the identifier of the first model, the network structure information of the first model, and the weight of the first model, the information that is about the first model and that is sent by the network device in step 501 may include the identifier of the first model. The terminal device determines the first model based on the information that is about the first model and that is received from the network device and the identifier of the first model, the network structure information of the first model, and the weight of the first model that are locally stored. The identifier of the first model, the network structure information of the first model, and the weight of the first model that are pre-stored in the terminal device may be defined in a protocol or a standard, or may be preconfigured by the network device for the terminal device.

In an implementation, the information about the first model may be carried in one piece of system information (system information, SI) for sending. For example, the system information may be SIB1 or another SIB.

Step 502: The terminal device determines a DMRS sequence based on an identifier of a preamble and the first model.

The terminal device may randomly select the preamble from a plurality of predefined preambles.

In an implementation, the terminal device determines a DMRS port number based on the identifier of the preamble, and then the terminal device inputs the DMRS port number into the first model, to obtain the DMRS sequence. In other words, an input parameter of the first model is the DMRS port number, and an output parameter is the DMRS sequence. A relationship between the identifier of the preamble and the DMRS port number may be indicated by the network device. For example, before step 502, the terminal device receives indication information from the network device, and the indication information indicates a correspondence between a RACH resource and a PUSCH resource, and a correspondence between the RACH resource and a DMRS port. Therefore, after determining a RACH resource for sending the preamble, the terminal device can determine a PUSCH resource and a DMRS port number that correspond to the RACH resource. For example, the indication information and the information about the first model may be sent in same system information, or may be sent in different system information.

In another implementation, the terminal device inputs the identifier of the preamble into the first model, to obtain the DMRS sequence. In other words, an input parameter of the first model is the identifier of the preamble, and an output parameter is the DMRS sequence.

Step 503: The terminal device sends, to the network device, the preamble carried on the RACH resource, and the DMRS sequence and PUSCH data that are carried on the PUSCH resource corresponding to the RACH resource.

Step 503 may also be understood as that the terminal device sends MsgA to the network device, where MsgA includes the preamble carried on the RACH resource, and the DMRS sequence and the PUSCH data that are carried on the PUSCH resource corresponding to the RACH resource, and the PUSCH data includes a random access request.

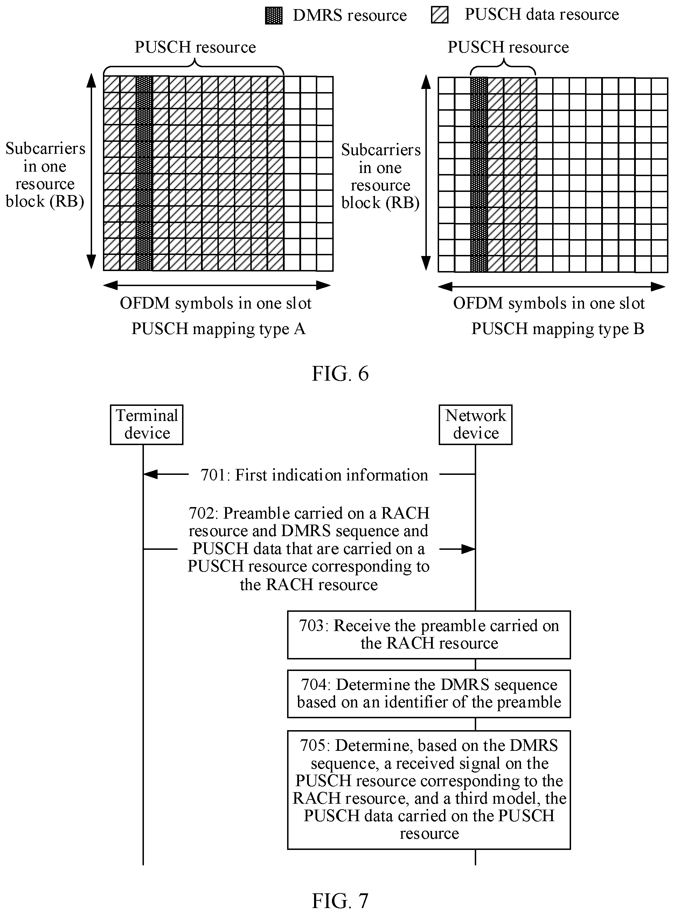

It should be noted that if the terminal device determines a DMRS port based on the identifier of the preamble, and then determines the DMRS sequence based on the DMRS port and the first model, there is a correspondence between the DMRS sequence and the DMRS port. In addition, in this embodiment of this application, although DMRS sequences sent by different terminal devices correspond to different DMRS ports, all the DMRS sequences may be mapped to a same DMRS resource. In other words, in this embodiment of this application, different DMRS ports correspond to the same DMRS resource. FIG. 6 is an example diagram of a DMRS resource configuration. Different DMRS ports all correspond to the same DMRS resource, in other words, all the DMRS ports correspond to an entire DMRS resource block. Therefore, different DMRS sequences are all mapped to the same DMRS resource. In addition, a quantity of DMRS ports is no longer limited. For example, for the example shown in FIG. 4(a), in this embodiment of this application, a maximum quantity of DMRS ports does not need to be limited to 4, 6, 8, or 12.

The terminal device may determine, in any one of the following manners, the PUSCH resource corresponding to the RACH resource.

Method 1: Before step 503, the terminal device receives indication information from the network device, where the indication information indicates the correspondence between the RACH resource and the PUSCH resource, so that after determining the RACH resource for sending the preamble, the terminal device can determine the PUSCH resource corresponding to the RACH resource.

Optionally, the indication information further indicates the correspondence between the RACH resource and the DMRS port.

Method 2: Before step 503, the terminal device receives information about a second model from the network device, and the terminal device determines the PUSCH resource based on the identifier of the preamble and the second model. In other words, the terminal device inputs the identifier of the preamble into the second model to obtain the PUSCH resource.

Because the preamble is carried on the RACH resource for sending, and the PUSCH resource is related to the identifier of the preamble, there is also an association relationship between the PUSCH resource and the RACH resource.

Optionally, the terminal device may further input the identifier of the preamble and first information into the second model, to obtain the PUSCH resource. The first information includes at least one of the following: a quantity of times that MsgA has been retransmitted, a priority of a service of the terminal device, quality of a synchronization signal block (synchronization signal block, SSB) measured by the terminal device, or an index of the SSB measured by the terminal device. In the method, the PUSCH resource is determined based on the first information, so that DMRS sequences sent by different terminal devices can be mapped to different PUSCH resources, to avoid mutual interference as much as possible, thereby improving a success rate of detecting PUSCH data by the network device.

Optionally, the terminal device inputs the identifier of the preamble and the first information into the second model, so that not only the PUSCH resource can be output, but also at least one of a transmit power of the preamble, a transmit power of the DMRS sequence, or a transmit power of the PUSCH data can be output. Further, in the foregoing step 503, the terminal device may send the preamble based on the transmit power of the preamble, send the DMRS sequence based on the transmit power of the DMRS sequence, and send the PUSCH data based on the transmit power of the PUSCH data. The method helps reduce mutual interference caused when different terminal devices send preambles, DMRS sequences, and PUSCH data, to improve a success rate of sending the preambles, the DMRS sequences, and the PUSCH data, and improve detection performance of the network device.

The information about the second model includes at least one of an identifier of the second model, network structure information of the second model, or a weight of the second model. The network structure information of the second model indicates information about each node in the second model and a relationship between nodes. The weight of the second model indicates a value of a coefficient or a weight between different nodes in the second model.

For example, if the information about the second model includes the identifier of the second model, the network structure information of the second model, and the weight of the second model, or includes the network structure information of the second model and the weight of the second model, the terminal device may determine the second model based on the information about the second model.

For another example, if the terminal device pre-stores the identifier of the second model and the network structure information of the second model, the information that is about the second model and that is sent by the network device may include the identifier of the second model and the weight of the second model. The terminal device determines the second model based on the information that is about the second model and that is received from the network device and the identifier of the second model and the network structure information of the second model that are locally stored. The identifier of the second model and the network structure information of the second model that are pre-stored in the terminal device may be defined in a protocol or a standard, or may be preconfigured by the network device for the terminal device.

For another example, if the terminal device pre-stores the identifier of the second model and the weight of the second model, the information that is about the second model and that is sent by the network device may include the identifier of the second model and the network structure information of the second model. The terminal device determines the second model based on the information that is about the second model and that is received from the network device and the identifier of the second model and the weight of the second model that are locally stored. The identifier of the second model and the weight of the second model that are pre-stored in the terminal device may be defined in a protocol or a standard, or may be preconfigured by the network device for the terminal device.

For another example, if the terminal device pre-stores the identifier of the second model, the network structure information of the second model, and the weight of the second model, the information that is about the second model and that is sent by the network device may include the identifier of the second model. The terminal device determines the second model based on the information that is about the second model and that is received from the network device and the identifier of the second model, the network structure information of the second model, and the weight of the second model that are locally stored. The identifier of the second model, the network structure information of the second model, and the weight of the second model that are pre-stored in the terminal device may be defined in a protocol or a standard, or may be preconfigured by the network device for the terminal device.

In an implementation, the information about the second model and the information about the first model may be carried in same system information for sending, or may be separately carried in different system information for sending.

Based on the foregoing step 501 to step 503, the terminal device determines the DMRS sequence based on the identifier of the preamble and the first model. Sending of different DMRS sequences is performed on the same DMRS resource, and is no longer limited by a quantity of DMRS port, so that more terminal devices are supported in simultaneously requesting random access.

Step 504: The network device receives the preamble carried on the RACH resource.

In other words, the network device performs detection on the RACH resource, detects the preamble, and determines the identifier of the detected preamble.

Step 505: The network device determines the DMRS sequence based on the identifier of the preamble and the first model.

A method for determining the DMRS sequence by the network device is the same as a method for determining the DMRS sequence by the terminal device. For detailed descriptions, refer to step 502.

Step 506: The network device determines, based on the DMRS sequence, a received signal on the PUSCH resource corresponding to the RACH resource, and a third model, the PUSCH data carried on the PUSCH resource.

The network device may determine, in any one of the following manners, the PUSCH resource corresponding to the RACH resource.

Method A: The network device pre-determines the correspondence between the RACH resource and the PUSCH resource, and notifies the terminal device of the correspondence. The terminal device determines, based on the correspondence, the PUSCH resource corresponding to the RACH resource, and sends the DMRS sequence and the PUSCH data on the PUSCH resource (where for details, refer to the descriptions in step 503). After detecting the preamble on the RACH resource, the network device also determines, based on the correspondence, the PUSCH resource corresponding to the RACH resource.

Method B: The network device determines the PUSCH resource based on the identifier of the preamble and the second model. For example, the network device inputs the identifier of the preamble into the second model to obtain the PUSCH resource, or inputs the identifier of the preamble and the first information into the second model to obtain the PUSCH resource. The first information includes at least one of the following: the quantity of times that MsgA has been retransmitted, the priority of the service of the terminal device, the quality of the SSB measured by the terminal device, or the index of the SSB measured by the terminal device. The second model herein is a same model as the second model used by the terminal device in step 503.

If the terminal device determines the PUSCH resource by using Method 1 described in step 503, the network device determines the PUSCH resource by using Method A herein. If the terminal device determines the PUSCH resource by using Method 2 described in step 503, the network device determines the PUSCH resource by using Method B herein. In other words, the terminal device and the network device determine the PUSCH resource by using a same method.

The received signal on the PUSCH resource includes all content mapped to the PUSCH resource, for example, includes the DMRS sequence and the PUSCH data. The network device inputs the DMRS sequence and the received signal on the PUSCH resource to the third model, to obtain the PUSCH data carried on the PUSCH resource.

In an implementation, the network device may store a plurality of third models, and different third models have different performance. For example, the network device may obtain a corresponding third model based on a quantity of terminal devices that send DMRS sequences on the PUSCH resource. In other words, the third model used by the network device is related to the quantity of terminal devices that send the DMRS sequences on the PUSCH resource. For example, when a plurality of terminal devices simultaneously request random access, the plurality of terminal devices simultaneously send DMRS sequences and random access requests on the same PUSCH resource. If a quantity of the terminal devices is 1 to 10, a 1^{st} third model is used; if a quantity of the terminal devices is 11 to 20, a 2^{nd} third model is used; and so on. Performance of the 2^{nd} third model is better than performance of the 1^{st} third model. Based on the method, the corresponding third model is determined based on the quantity of terminal devices that send DMRS sequences on the same PUSCH resource. This helps select a third model with proper performance for parsing PUSCH data, and improve a success rate of data parsing.

Based on the foregoing step 504 to step 506, the network device determines the DMRS sequence based on the identifier of the preamble and the first model. Sending of different DMRS sequences is performed on the same DMRS resource, and is no longer limited by a quantity of DMRS port, so that more terminal devices are supported in simultaneously requesting random access. In addition, the network device does not need to perform channel estimation. Instead, the network device can obtain the PUSCH data by inputting the received signal on the PUSCH resource into the third model, so that a detection method is simple and has high precision.

FIG. 7 is a schematic flowchart of a communication method according to an embodiment of this application. The method is performed by a network device or a module (for example, a chip) of the network device, and a terminal device or a module (for example, a chip) of the terminal device. The following uses an example in which the method is performed by the network device and the terminal device for description.

The method includes the following steps.

Step 701: The network device sends first indication information to the terminal device. Correspondingly, the terminal device receives the first indication information.

The first indication information indicates a DMRS sequence corresponding to a preamble. In other words, the terminal device may determine a mapping relationship between the preamble and the DMRS sequence based on the first indication information.

In an implementation, the first indication information includes a correspondence between the preamble and the DMRS sequence. Therefore, after selecting the preamble, the terminal device may determine a corresponding DMRS sequence based on the correspondence that is between the preamble and the DMRS sequence and that is indicated by the first indication information. For example, the first indication information includes (preamble ID#1 and DMRS sequence #1), (preamble ID#2 and DMRS sequence #2), and (preamble ID#3 and DMRS sequence #3). Preamble ID#1 indicates preamble #1, and preamble #1 corresponds to a DMRS sequence 1. Preamble ID#2 indicates preamble #2, and preamble #2 corresponds to a DMRS sequence 2. Preamble ID#3 indicates preamble #3, and preamble #3 corresponds to a DMRS sequence 3. If the preamble selected by the terminal device is preamble #1, the determined DMRS sequence is DMRS sequence #1.

In another implementation, the first indication information includes an identifier of the DMRS sequence and the DMRS sequence, and the terminal device pre-stores a correspondence between the identifier of the DMRS sequence and an identifier of the preamble. Therefore, after selecting the preamble, the terminal device may determine the DMRS sequence based on the first indication information and the correspondence that is between the identifier of the DMRS sequence and the identifier of the preamble and that is stored in the terminal device. For example, the terminal device pre-stores (preamble ID#1 and DMRS sequence ID#1), (preamble ID#2 and DMRS sequence ID#2), and (preamble ID#3 and DMRS sequence ID#3). The first indication information includes (DMRS sequence ID#1 and DMRS sequence #1), (DMRS sequence ID#2 and DMRS sequence #2), and (DMRS sequence ID#3 and DMRS sequence #3). If the preamble selected by the terminal device is preamble #1, and preamble #1 is indicated by preamble ID#1, the determined DMRS sequence is the DMRS sequence #1.

Step 702: The terminal device sends, based on the first indication information, to the network device, the preamble carried on a RACH resource, and the DMRS sequence and PUSCH data that are carried on a PUSCH resource corresponding to the RACH resource.

Step 702 may also be understood as that the terminal device sends MsgA to the network device, where MsgA includes the preamble carried on the RACH resource, and the DMRS sequence and the PUSCH data that are carried on the PUSCH resource corresponding to the RACH resource, and the PUSCH data includes a random access request.

The terminal device may determine, in any one of the following manners, the PUSCH resource corresponding to the RACH resource.

Method 1: Before step 702, the terminal device receives second indication information from the network device, where the second indication information indicates a correspondence between the RACH resource and the PUSCH resource, so that after determining the RACH resource for sending the preamble, the terminal device can determine, based on the second indication information, the PUSCH resource corresponding to the RACH resource.

Optionally, the second indication information further indicates a correspondence between the RACH resource and a DMRS port.

Optionally, the second indication information and the first indication information are included in same system information, or are separately included in different system information.

Method 2: Before step 702, the terminal device receives information about a second model from the network device, and the terminal device determines the PUSCH resource based on the identifier of the preamble and the second model. In other words, the terminal device inputs the identifier of the preamble into the second model to obtain the PUSCH resource.

Because the preamble is carried on the RACH resource for sending, and the PUSCH resource is related to the identifier of the preamble, there is also an association relationship between the PUSCH resource and the RACH resource.

Optionally, the terminal device may further input the identifier of the preamble and first information into the second model, to obtain the PUSCH resource. The first information includes at least one of the following: a quantity of times that MsgA has been retransmitted, a priority of a service of the terminal device, quality of an SSB measured by the terminal device, or an index of the SSB measured by the terminal device. In the method, the PUSCH resource is determined based on the first information, so that DMRS sequences sent by different terminal devices can be mapped to different PUSCH resources, to avoid mutual interference as much as possible, thereby improving a success rate of detecting PUSCH data by the network device.

Optionally, the terminal device inputs the identifier of the preamble and the first information into the second model, so that not only the PUSCH resource can be output, but also at least one of a transmit power of the preamble, a transmit power of the DMRS sequence, or a transmit power of the PUSCH data can be output. Further, in the foregoing step 702, the terminal device may send the preamble based on the transmit power of the preamble, send the DMRS sequence based on the transmit power of the DMRS sequence, and send the PUSCH data based on the transmit power of the PUSCH data. The method helps reduce mutual interference caused when different terminal devices send preambles, DMRS sequences, and PUSCH data, to improve a success rate of sending the preambles, the DMRS sequences, and the PUSCH data, and improve detection performance of the network device.

The information about the second model includes at least one of an identifier of the second model, network structure information of the second model, or a weight of the second model. The network structure information of the second model indicates information about each node in the second model and a relationship between nodes. The weight of the second model indicates a value of a coefficient or a weight between different nodes in the second model.

For example, if the information about the second model includes the identifier of the second model, the network structure information of the second model, and the weight of the second model, or includes the network structure information of the second model and the weight of the second model, the terminal device may determine the second model based on the information about the second model.

For another example, if the terminal device pre-stores the identifier of the second model and the network structure information of the second model, the information that is about the second model and that is sent by the network device may include the identifier of the second model and the weight of the second model. The terminal device determines the second model based on the information that is about the second model and that is received from the network device and the identifier of the second model and the network structure information of the second model that are locally stored. The identifier of the second model and the network structure information of the second model that are pre-stored in the terminal device may be defined in a protocol or a standard, or may be preconfigured by the network device for the terminal device.

For another example, if the terminal device pre-stores the identifier of the second model and the weight of the second model, the information that is about the second model and that is sent by the network device may include the identifier of the second model and the network structure information of the second model. The terminal device determines the second model based on the information that is about the second model and that is received from the network device and the identifier of the second model and the weight of the second model that are locally stored. The identifier of the second model and the weight of the second model that are pre-stored in the terminal device may be defined in a protocol or a standard, or may be preconfigured by the network device for the terminal device.

For another example, if the terminal device pre-stores the identifier of the second model, the network structure information of the second model, and the weight of the second model, the information that is about the second model and that is sent by the network device may include the identifier of the second model. The terminal device determines the second model based on the information that is about the second model and that is received from the network device and the identifier of the second model, the network structure information of the second model, and the weight of the second model that are locally stored. The identifier of the second model, the network structure information of the second model, and the weight of the second model that are pre-stored in the terminal device may be defined in a protocol or a standard, or may be preconfigured by the network device for the terminal device.

In an implementation, the information about the second model and the first indication information may be carried in same system information for sending, or may be separately carried in different system information for sending.

Based on the foregoing step 701 and step 702, the terminal device determines the DMRS sequence based on the first indication information. Sending of different DMRS sequences is performed on the same DMRS resource, and is no longer limited by a quantity of DMRS port, so that more terminal devices are supported in simultaneously requesting random access.

Step 703: The network device receives the preamble carried on the RACH resource.

In other words, the network device performs detection on the RACH resource, detects the preamble, and determines the identifier of the detected preamble.

Step 704: The network device determines the DMRS sequence based on the identifier of the preamble.

A method for determining the DMRS sequence by the network device is the same as a method for determining the DMRS sequence by the terminal device. For detailed descriptions, refer to step 702.

Step 705: The network device determines, based on the DMRS sequence, a received signal on the PUSCH resource corresponding to the RACH resource, and a third model, the PUSCH data carried on the PUSCH resource.

The network device may determine, in any one of the following manners, the PUSCH resource corresponding to the RACH resource.

Method A: The network device pre-determines the correspondence between the RACH resource and the PUSCH resource, and notifies the terminal device of the correspondence. The terminal device determines, based on the correspondence, the PUSCH resource corresponding to the RACH resource, and sends the DMRS sequence and the PUSCH data on the PUSCH resource (where for details, refer to the descriptions in step 702). After detecting the preamble on the RACH resource, the network device also determines, based on the correspondence, the PUSCH resource corresponding to the RACH resource.

Method B: The network device determines the PUSCH resource based on the identifier of the preamble and the second model. For example, the network device inputs the identifier of the preamble into the second model to obtain the PUSCH resource, or inputs the identifier of the preamble and the first information into the second model to obtain the PUSCH resource. The first information includes at least one of the following: a quantity of times that MsgA has been retransmitted, a priority of a service of the terminal device, quality of an SSB measured by the terminal device, or an index of the SSB measured by the terminal device. The second model herein is a same model as the second model used by the terminal device in step 702.

If the terminal device determines the PUSCH resource by using Method 1 described in step 702, the network device determines the PUSCH resource by using Method A herein. If the terminal device determines the PUSCH resource by using Method 2 described in step 702, the network device determines the PUSCH resource by using Method B herein. In other words, the terminal device and the network device determine the PUSCH resource by using a same method.

The received signal on the PUSCH resource includes all content mapped to the PUSCH resource, for example, includes the DMRS sequence and the PUSCH data. The network device inputs the DMRS sequence and the received signal on the PUSCH resource to the third model, to obtain the PUSCH data carried on the PUSCH resource.

In an implementation, the network device may store a plurality of third models, and different third models have different performance. For example, the network device may obtain a corresponding third model based on a quantity of terminal devices that send DMRS sequences on the PUSCH resource. In other words, the third model used by the network device is related to the quantity of terminal devices that send the DMRS sequences on the PUSCH resource. For example, when a plurality of terminal devices simultaneously request random requests, the plurality of terminal devices simultaneously send DMRS sequences and random access requests on the same PUSCH resource. If a quantity of the terminal devices is 1 to 10, a 1^{st} third model is used; if a quantity of the terminal devices is 11 to 20, a 2^{nd} third model is used; and so on. Performance of the 2^{nd} third model is better than performance of the 1^{st} third model.

Based on the foregoing step 703 to step 705, the network device determines the DMRS sequence based on the identifier of the preamble and the first model. Sending of different DMRS sequences is performed on the same DMRS resource, and is no longer limited by a quantity of DMRS port, so that more terminal devices are supported in simultaneously requesting random access. In addition, the network device does not need to perform channel estimation. Instead, the network device can obtain the PUSCH data by inputting the received signal on the PUSCH resource into the third model, so that a detection method is simple and has high precision.

It may be understood that, to implement functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

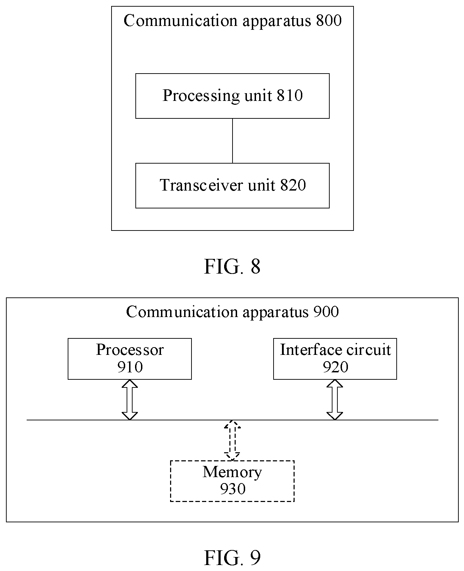

FIG. 8 and FIG. 9 are diagrams of structures of possible communication apparatuses according to an embodiment of this application. The communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device, or may be a network device, or may be a module (for example, a chip) used in the terminal device or the network device.

A communication apparatus 800 shown in FIG. 8 includes a processing unit 810 and a transceiver unit 820. The communication apparatus 800 is configured to implement functions of the terminal device or the network device in the foregoing method embodiments.

When the communication apparatus 800 is configured to implement functions of the terminal device in the foregoing method embodiments, the transceiver unit 820 is configured to receive information about a first model; the processing unit 810 is configured to determine a DMRS sequence based on an identifier of a preamble and the first model; and the transceiver unit 820 is further configured to send the preamble carried on a RACH resource, and the DMRS sequence and PUSCH data that are carried on a PUSCH resource corresponding to the RACH resource.

In a possible implementation, the processing unit 810 is configured to determine a DMRS port number based on the identifier of the preamble and inputting the DMRS port number into the first model to obtain the DMRS sequence; or inputting the identifier of the preamble into the first model to obtain the DMRS sequence.

In a possible implementation, the transceiver unit 820 is further configured to receive indication information, where the indication information indicates a correspondence between the RACH resource and the PUSCH resource.

In a possible implementation, the information about the first model and the indication information are included in same system information, or are separately included in different system information.

In a possible implementation, the transceiver unit 820 is further configured to: receive information about a second model; and determine the PUSCH resource based on the identifier of the preamble and the second model.

In a possible implementation, the information about the first model and the information about the second model are included in same system information, or are separately included in different system information.

In a possible implementation, the information about the first model includes at least one of an identifier of the first model, network structure information of the first model, or a weight of the first model. The information about the second model includes at least one of an identifier of the second model, network structure information of the second model, or a weight of the second model.

In a possible implementation, that the processing unit 810 is configured to determine the PUSCH resource based on the identifier of the preamble and the second model specifically includes: The processing unit 810 is configured to determine the PUSCH resource based on the identifier of the preamble, first information, and the second model, where the first information includes at least one of the following: a priority of a service of the terminal device, quality of an SSB measured by the terminal device, or an index of the SSB measured by the terminal device.

In a possible implementation, the processing unit 810 is further configured to determine at least one of a transmit power of the preamble, a transmit power of the DMRS sequence, or a transmit power of the PUSCH data based on the identifier of the preamble, the first information, and the second model.

When the communication apparatus 800 is configured to implement functions of the terminal device in the foregoing method embodiments, the transceiver unit 820 is configured to receive first indication information, where the first indication information indicates a DMRS sequence corresponding to a preamble; the processing unit 810 is configured to send, based on the first indication information via the transceiver unit 820, the preamble carried on a RACH resource, and the DMRS sequence and PUSCH data that are carried on a PUSCH resource corresponding to the RACH resource.

In a possible implementation, the first indication information includes a correspondence between the preamble and the DMRS sequence.

In a possible implementation, the first indication information includes an identifier of the DMRS sequence and the DMRS sequence. The processing unit 810 is further configured to determine the DMRS sequence based on the first indication information and a correspondence between the identifier of the DMRS sequence and an identifier of the preamble.

In a possible implementation, the transceiver unit 820 is further configured to receive second indication information, where the second indication information indicates a correspondence between the RACH resource and the PUSCH resource.

In a possible implementation, the first indication information and the second indication information are included in same system information, or are separately included in different system information.

In a possible implementation, the transceiver unit 820 is further configured to: receive information about a second model; and determine the PUSCH resource based on the identifier of the preamble and the second model.

In a possible implementation, the first indication information and the information about the second model are included in same system information, or are separately included in different system information.

In a possible implementation, the information about the second model includes at least one of an identifier of the second model, network structure information of the second model, or a weight of the second model.

In a possible implementation, that the processing unit 810 is configured to determine the PUSCH resource based on the identifier of the preamble and the second model specifically includes: The processing unit 810 is configured to determine the PUSCH resource based on the identifier of the preamble, first information, and the second model, where the first information includes at least one of the following: a priority of a service of the terminal device, quality of an SSB measured by the terminal device, or an index of the SSB measured by the terminal device.

In a possible implementation, the processing unit 810 is further configured to determine at least one of a transmit power of the preamble, a transmit power of the DMRS sequence, or a transmit power of the PUSCH data based on the identifier of the preamble, the first information, and the second model.

When the communication apparatus 800 is configured to implement functions of the network device in the foregoing method embodiments, the transceiver unit 820 is configured to receive a preamble carried on a RACH resource; and the processing unit 810 is configured to: determine a DMRS sequence based on an identifier of the preamble; and determine, based on the DMRS sequence, a received signal on a PUSCH resource corresponding to the RACH resource, and a third model, PUSCH data carried on the PUSCH resource.

In a possible implementation, that the processing unit 810 is configured to determine the DMRS sequence based on the identifier of the preamble specifically includes: The processing unit 810 is configured to determine the DMRS sequence based on the identifier of the preamble and a first model.

In a possible implementation, that the processing unit 810 is configured to determine the DMRS sequence based on the identifier of the preamble and the first model specifically includes: The processing unit 810 is configured to determine a DMRS port number based on the identifier of the preamble and inputting the DMRS port number into the first model to obtain the DMRS sequence; or inputting the identifier of the preamble into the first model to obtain the DMRS sequence.

In a possible implementation, the transceiver unit 820 is further configured to send information about the first model.

In a possible implementation, the information about the first model includes at least one of an identifier of the first model, network structure information of the first model, or a weight of the first model.

In a possible implementation, the processing unit 810 is further configured to determine the PUSCH resource based on the identifier of the preamble and a second model.

In a possible implementation, the transceiver unit 820 is further configured to send information about the second model.

In a possible implementation, the information about the second model includes at least one of an identifier of the second model, network structure information of the second model, or a weight of the second model.

In a possible implementation, the processing unit 810 is further configured to obtain the third model based on a quantity of terminal devices that send DMRS sequences on the PUSCH resource.

For more detailed descriptions of the processing unit 810 and the transceiver unit 820, directly refer to related descriptions in the foregoing method embodiments. Details are not described herein again.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the foregoing method embodiments, the processor 910 is configured to implement functions of the processing unit 810, and the interface circuit 920 is configured to implement functions of the transceiver unit 820.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

An embodiment of this application further provides a chip (or a chip system). The chip includes a processor, the processor is coupled to a memory, the memory stores a computer program, and the processor is configured to invoke a part or all of the computer program in the memory, to cause any implementation of the first aspect to the third aspect to be performed.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, and a compact disc read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal device or a network device. Certainly, the processor and the storage medium may alternatively exist in an access network device or a terminal as discrete components.

All or a part of the foregoing embodiments may be implemented by software, hardware, firmware, or any combination thereof. When software is used to implement embodiments, all or a part of the foregoing embodiments may be implemented in a form of a computer program product. The computer program product includes one or more computer programs or instructions. The computer program (computer program) is a set of instructions that indicate each step of an electronic computer or another device having a message processing capability, and is usually written in a program design language and run on a target architecture. When the computer programs or the instructions are loaded and executed on a computer, procedures or functions in embodiments of this application are all or partially executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or a logical conflict occurs, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving information about a first model;
determining a demodulation reference signal DMRS sequence based on an identifier of a preamble and the first model; and
sending the preamble carried on a random access channel RACH resource, and the DMRS sequence and PUSCH data that are carried on a physical uplink shared channel PUSCH resource corresponding to the RACH resource.

2. The method according to claim 1, wherein the determining the DMRS sequence based on the identifier of the preamble and the first model comprises:
determining a DMRS port number based on the identifier of the preamble and inputting the DMRS port number into the first model to obtain the DMRS sequence; or
inputting the identifier of the preamble into the first model to obtain the DMRS sequence.

3. The method according to claim 1 or 2, wherein the method further comprises:
receiving indication information, wherein the indication information indicates a correspondence between the RACH resource and the PUSCH resource.

4. The method according to claim 3, wherein the information about the first model and the indication information are comprised in same system information, or are separately comprised in different system information.

5. The method according to claim 1 or 2, wherein the method further comprises:
receiving information about a second model; and
determining the PUSCH resource based on the identifier of the preamble and the second model.

6. The method according to claim 5, wherein the information about the first model and the information about the second model are comprised in same system information, or are separately comprised in different system information.

7. The method according to claim 5 or 6, wherein the information about the first model comprises at least one of an identifier of the first model, network structure information of the first model, or a weight of the first model; and
the information about the second model comprises at least one of an identifier of the second model, network structure information of the second model, or a weight of the second model.

8. The method according to any one of claims 5 to 7, wherein the determining the PUSCH resource based on the identifier of the preamble and the second model comprises:
determining the PUSCH resource based on the identifier of the preamble, first information, and the second model, wherein the first information comprises at least one of the following: a priority of a service of a terminal device, quality of a synchronization signal block SSB measured by the terminal device, or an index of the SSB measured by the terminal device.

9. The method according to claim 8, wherein the method further comprises:
determining at least one of a transmit power of the preamble, a transmit power of the DMRS sequence, or a transmit power of the PUSCH data based on the identifier of the preamble, the first information, and the second model.

10. A communication method, wherein the method comprises:
receiving first indication information, wherein the first indication information indicates a demodulation reference signal DMRS sequence corresponding to a preamble; and
sending, based on the first indication information, the preamble carried on a random access channel RACH resource, and the DMRS sequence and PUSCH data that are carried on a physical uplink shared channel PUSCH resource corresponding to the RACH resource.

11. The method according to claim 10, wherein the first indication information comprises a correspondence between the preamble and the DMRS sequence.

12. The method according to claim 10, wherein the first indication information comprises an identifier of the DMRS sequence and the DMRS sequence, and the method further comprises:
determining the DMRS sequence based on the first indication information and a correspondence between the identifier of the DMRS sequence and an identifier of the preamble.

13. The method according to any one of claims 10 to 12, wherein the method further comprises:
receiving second indication information, wherein the second indication information indicates a correspondence between the RACH resource and the PUSCH resource.

14. The method according to claim 13, wherein the first indication information and the second indication information are comprised in same system information, or are separately comprised in different system information.

15. The method according to any one of claims 10 to 12, wherein the method further comprises:
receiving information about a second model; and
determining the PUSCH resource based on the identifier of the preamble and the second model.

16. The method according to claim 15, wherein the first indication information and the information about the second model are comprised in same system information, or are separately comprised in different system information.

17. The method according to claim 15 or 16, wherein the information about the second model comprises at least one of an identifier of the second model, network structure information of the second model, or a weight of the second model.

18. The method according to any one of claims 15 to 17, wherein the determining the PUSCH resource based on the identifier of the preamble and the second model comprises:
determining the PUSCH resource based on the identifier of the preamble, first information, and the second model, wherein the first information comprises at least one of the following: a priority of a service of a terminal device, quality of a synchronization signal block SSB measured by the terminal device, or an index of the SSB measured by the terminal device.

19. The method according to claim 18, wherein the method further comprises:
determining at least one of a transmit power of the preamble, a transmit power of the DMRS sequence, or a transmit power of the PUSCH data based on the identifier of the preamble, the first information, and the second model.

20. A communication method, wherein the method comprises:
receiving a preamble carried on a random access channel RACH resource;
determining a demodulation reference signal DMRS sequence based on an identifier of the preamble; and
determining, based on the DMRS sequence, a received signal on a physical uplink shared channel PUSCH resource corresponding to the RACH resource, and a third model, PUSCH data carried on the PUSCH resource.

21. The method according to claim 20, wherein the determining the DMRS sequence based on the identifier of the preamble comprises:
determining the DMRS sequence based on the identifier of the preamble and a first model.

22. The method according to claim 21, wherein the determining the DMRS sequence based on the identifier of the preamble and the first model comprises:
determining a DMRS port number based on the identifier of the preamble and inputting the DMRS port number into the first model to obtain the DMRS sequence; or
inputting the identifier of the preamble into the first model to obtain the DMRS sequence.

23. The method according to claim 21 or 22, wherein the method further comprises:
sending information about the first model.

24. The method according to any one of claims 21 to 23, wherein the information about the first model comprises at least one of an identifier of the first model, network structure information of the first model, or a weight of the first model.

25. The method according to any one of claims 20 to 24, wherein the method further comprises:
determining the PUSCH resource based on the identifier of the preamble and a second model.

26. The method according to claim 25, wherein the method further comprises:
sending information about the second model.

27. The method according to claim 25 or 26, wherein the information about the second model comprises at least one of an identifier of the second model, network structure information of the second model, or a weight of the second model.

28. The method according to any one of claims 20 to 27, wherein the method further comprises:
obtaining the third model based on a quantity of terminal devices that send DMRS sequences on the PUSCH resource.

29. A communication apparatus, comprising a processor and an interface circuit, wherein the processor is configured to: communicate with another apparatus through the interface circuit; and perform the method according to any one of claims 1 to 9, the method according to any one of claims 10 to 19, or the method according to any one of claims 20 to 28.

30. A chip, wherein the chip comprises a processor, the processor is coupled to a memory, the memory stores a computer program, and the processor is configured to invoke a part or all of the computer program in the memory, to cause the method according to any one of claims 1 to 9, the method according to any one of claims 10 to 19, or the method according to any one of claims 20 to 28 to be performed.

31. A computer program product, wherein the computer program product comprises instructions, and when the instructions are run on a processor, the method according to any one of claims 1 to 9, the method according to any one of claims 10 to 19, or the method according to any one of claims 20 to 28 is performed.

32. A computer-readable storage medium, wherein the storage medium stores a computer program or instructions, and when the computer program or the instructions are executed by a communication apparatus, the method according to any one of claims 1 to 9 is implemented, or the method according to any one of claims 10 to 19 is implemented, or the method according to any one of claims 20 to 28 is implemented.
